# EUROPEAN PATENT APPLICATION

(11) **EP 1 104 909 A2**
(43) Date of publication of application: **06.06.2001**
(21) Application number: 00124406.0
(22) Date of filing: 08.11.2000
(51) Int. Cl.: G06K 19/07, G06K 7/08

(54) **Multifunctional smart card with use as adapter for magnetic cards**

(30) Priority: 15.11.1999 IT TO990986
(71) Applicant: Smartel S.p.A., 20153 Milano (IT)
(72) Inventor: Parziale, Anacleto, 20020 Arese (MI) (IT); Gatti, Davide, 20099 Sesto S. Giovanni (MI) (IT)

(57) **Abstract**

A multifunctional smart card (10) with microprocessor comprising a logical, physical and electrical interface (13, 12, 12a) compliant with the ISO standard 7816 for coupling and exchanging data with corresponding external reading equipment (15), and an internal reader (21) of magnetic cards (22) mounted on a support (11) of the multifunctional smart card (10), wherein the ISO 7816 interface is connected to the internal reader (21) for managing in relation to the external reading equipment (15) the data read from the magnetic cards (22). This multifunctional smart card (10) constitutes a useful and advantageous device by means of which a normal magnetic card (22), for example of the type enabling the transactions of withdrawing and paying a sum of money, may be adapted for use on a terminal arranged solely for receiving smart type, microprocessor-based cards. The multifunctional smart card (10) also comprises a serial port (28) connected to the ISO 7816 interface for connecting to and exchanging data with a generic external device provided with serial type interface, such as for example a printer.

## Description

### FIELD OF THE INVENTION

This invention relates to a microprocessor-based smart card having a logical, physical and electrical interface for coupling and exchanging data with external reading equipment suitable for receiving and reading the smart card.

### BACKGROUND OF THE INVENTION

Microprocessor-based smart cards, simply known as "Smart Cards", are widely known and distributed, and are used, generally, to enable the use of various equipment items whenever a high degree of security is required.

For example, the known smart cards are used to enable the use of cellular telephones, electronic computers or banking terminals.

Also known are magnetic cards brought on to the market before smart cards and which, mainly for historical reasons, are still used today for purposes equivalent to those of smart cards, i.e. for enabling equipment for cash withdrawals, for buying goods and so on, even though they are incompatible with smart cards and even though they offer a level of security lower than that obtainable with smart cards.

Magnetic cards, therefore, both because they appeared on the market first and because they cost less, are used as alternatives to smart cards, have a much wider circulation, and are also often preferred for the production of credit cards or bank cards.

It is also known that equipment provided with a smart card reader is unable to read and/or manage magnetic cards and vice versa with the same device, and that, accordingly, depending on the type of reader that is present in the equipment, either a smart card or a magnetic card must be used.

A first technical problem relating to co-existence on the market of these two types of cards and their physical incompatibility lies in the fact that the equipment, such as for instance cellular phones, requiring the use of smart cards only in order to be enabled, cannot be activated with a magnetic card even if this were convenient.

Accordingly, a user wanting to use a magnetic card, for example a credit card, to activate equipment arranged solely for the use of smart cards would be impeded from doing so with important limitations in user flexibility of the equipment in question.

A second technical problem, caused by the simultaneous presence on the market of smart cards and magnetic cards, is that some equipment, for example the POS (abbreviation for Point Of Sale) type equipment associated with the cash desk at points of sale, must necessarily comprise at least two types of readers, one for smart cards and one for magnetic cards.

### SUMMARY OF THE INVENTION

The object of this invention is to resolve the technical problems existing in the known art, and in general to permit the use of magnetic cards in a simple, reliable and effective way on items of equipment provided with the smart card reader only.

Another object similar to the first is that of finding a solution that allows an ordinary magnetic card to be adapted so that it may be used on a reader capable of accepting and reading smart cards only.

These objects are achieved with the multifunctional smart card having the characteristics defined in the main claim.

### BRIEF DESCRIPTION OF THE DRAWINGS

This and other characteristics of this invention will become apparent in the course of the following description of a preferred embodiment, provided by way of non-limiting example in connection with the attached drawings wherein:
Fig. 1 represents a perspective from above of a multifunctional smart card according to this invention, in combination with external equipment intended for receiving and reading the same multifunctional smart card;
Fig. 2 represents a perspective from below in a partial enlargement of the multifunctional smart card of Fig.1; and
Fig. 3 is a block diagram of the electric circuit contained in the multifunctional smart card of Fig.1.

### DESCRIPTION OF A PREFERRED EMBODIMENT OF A MULTIFUNCTIONAL SMART CARD ACCORDING TO THE INVENTION

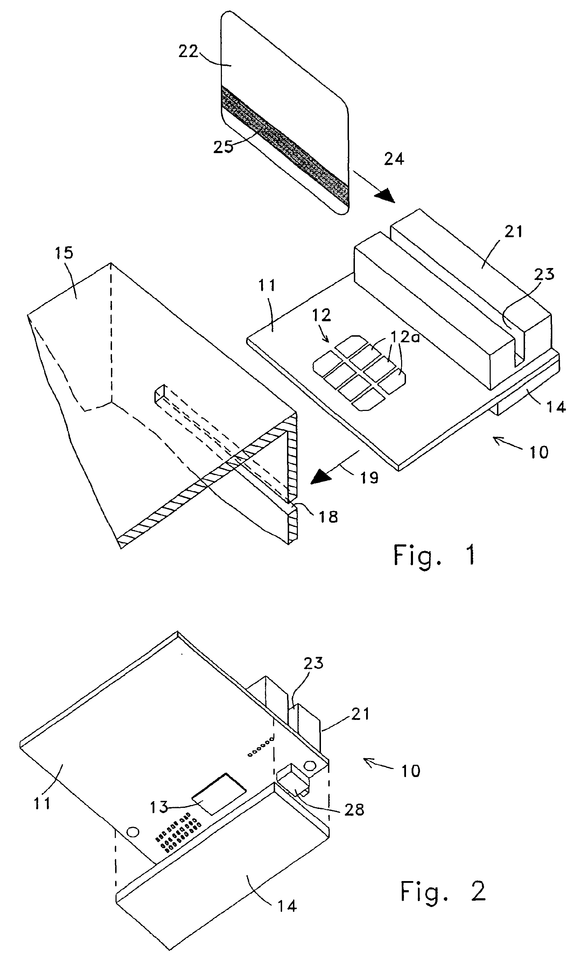

With reference to Figs. 1 and 2, a multifunctional smart card according to this invention is indicated with the numeral 10 and is equipped with an interface for coupling with external reading equipment 15 suitable for receiving the smart card 10 in order to read it and exchange data with it.

The external reading equipment 15 may be incorporated in a terminal, a banking terminal for instance, in turn belonging to a processing and control system normally governed by a central computer, also called "host computer".

In this case, the multifunctional smart card 10 is coupled with the external equipment 15 to enable the banking terminal to carry out certain transactions, notably those of paying or of withdrawing money.

The external reading equipment 15 may also be associated with a cellular telephone to enable its operation through the multifunctional smart card 10.

The interface that the multifunctional smart card 10 is equipped with is capable of guaranteeing complete mechanical, electrical and logical compatibility between the multifunctional smart card 10 and the external reading equipment 15, so that, when the smart card 10 is coupled with the external reading equipment 15, it is possible to transmit and exchange data between the same multifunctional smart card 10 and the external reading equipment 15.

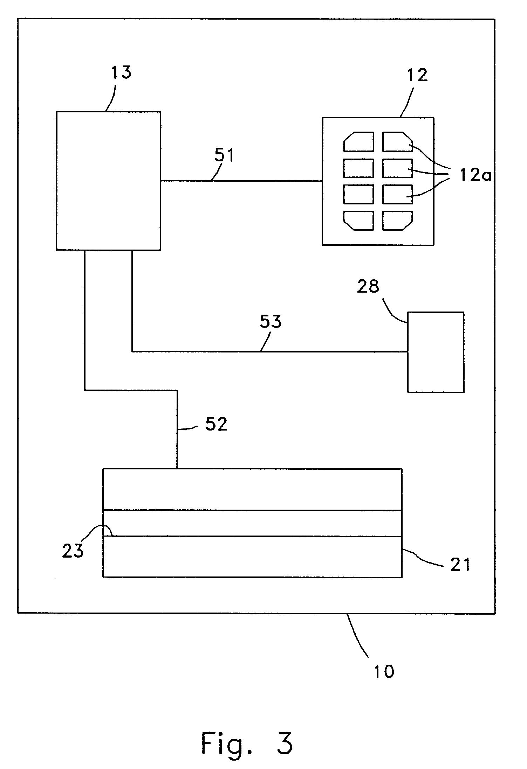

In particular, the interface comprises a laminar support 11, consisting of a sheet of plastic material generally rectangular in shape, of dimensions suitable to allow the multifunctional smart card 10 be inserted in and mechanically coupled with the external reading equipment 15; a microprocessor 13 with associated circuitry; and a contact area 12 connected to the microprocessor 13 through a line 51 (Fig. 3) made in the support 11.

A cover 14 arranged above the laminar support 11 is provided in order to protect the various circuits of the interface.

The microprocessor 13 belongs to the category of what are known as "microcontrollers", integrating processing and memorising functions, and is for example of the HD64S2134 type produced by the HITACHI company.

The contact area 12 consists of a plurality of contacts 12a and is arranged on a lateral portion of the laminar support 11, which is intended to be inserted in the reading equipment 15, generally through a slot 18, as indicated by the arrow 19 of Fig. 1.

In this way, as already stated, when the multifunctional smart card 10 is fully and correctly inserted in the external reading equipment 15, the contact area 12 electrically connects the multifunctional smart card 10 to the external reading equipment 15, so that the latter can read the data memorised in the multifunctional smart card 10, and thus allow the system in which the reading equipment 15 is inserted to process these data for carrying out those operations, particularly of enabling, for which the multifunctional smart card 10 is typically used, while in turn the microprocessor 13 can also receive other data from the system depending on the operations that are being carried out.

From an electrical viewpoint, the interface that the multifunctional smart card 10 is equipped with defines the structure of the contact area 12 and of the connections between the latter and the microprocessor 13; whereas, from a logical viewpoint, the interface controls the transmission and the exchange of signals and data between the microprocessor 13 and the external reading equipment 15 through the contact area 12.

In particular, the interface is compliant with the ISO 7816 standard, in keeping with the characteristics of the smart cards currently in circulation.

Moreover the portion of the support 11 that couples mechanically with the external reading equipment 15 is of dimensions in accordance with the above-mentioned standard ISO 7816.

As this standard is widely known, no attempt will be made to describe it in detail herein, the description confining itself to giving occasionally, particularly during the account of operation of the smart card 10, that information of use for an understanding of the invention.

According to a primary characteristic of the invention the multifunctional smart card 10 incorporates an internal magnetic card reader 21, which is suitable for cooperating with a magnetic card 22, also called "badge", for reading its data.

The internal reader 21 is mounted on a portion of the support 11 opposite the portion bearing the contact area 12, and is connected for the purpose of exchanging signals and data with the ISO 7816 interface.

In particular, for this purpose, the reading device 21 is connected directly through a line 52 (Fig. 3) with the microprocessor 13 in order to send the latter the signals corresponding to the data read from the magnetic cards 22.

In addition, the structure of the internal reader 21 protrudes slightly from the support 11 and comprises a slot 23 along which the magnetic card 22 is made slide as indicated by the arrow 24, so that the data stored on the magnetic card are read by the reading device 21.

The magnetic cards 22 legible by means of the reading device 21 incorporated in the multifunctional smart card 10 are of known type and may, for example, belong to the category of what are known as credit or debit cards.

In particular, each magnetic card 22 is provided with a magnetic stripe 25 having a plurality of tracks upon which are stored data which are read by the reader 21 during the sliding of the magnetic card 22 along the slot 23.

The multifunctional smart card 10 may also comprise, either alone or in combination with the magnetic card reading device 21, a serial port 28 of the RS232C type, powered with a voltage of 5 volts, to enable the connection and exchange of data on the smart card 10, once it has been inserted in the relative external reading equipment 15, with a generic external device provided with a serial interface, such as for instance a printer.

Like the reading device 21, the port 28 is connected, for the purposes of managing the data exchanged with the generic external device, to the ISO 7816 interface which the multifunctional smart card 10 is provided with, and in particular the port 28 is connected directly to the microprocessor 13 via a line 53 (Fig. 3).

### Operation of the multifunctional smart card according to the invention

The method of operation of the multifunctional smart card 10 described up to here is as follows.

To commence, the multifunctional smart card 10 is inserted with the portion having the contact area 12 in the external reading equipment 15, through the slot 18.

In this way the smart card 10 is electrically connected through the contact area 12 to the external reading equipment 15, so as to be able to exchange data with the system that the reading equipment 15 belongs to.

The multifunctional smart card 10 and reading equipment 15 are structured in such a way that the smart card 10, when it is completely and correctly inserted in the reading device 15, partly protrudes from the latter, so as to present to the outside the portion with the magnetic card reader 21.

In this stage, after an initial reset, the reading equipment 15 sends the smart card 10 a series of commands which, in accordance with the provisions of ISO standard 7816, have the purpose of defining the organization and criteria for subdivision of the data and information exchanged between the reading device 15 and the various devices, namely the magnetic card reader 21 with the corresponding magnetic cards 22 or the external devices connectable through the port 28, which are interfaced by the smart card 10.

In particular, the multifunctional smart card 10 emulates in the same way as an ordinary smart card a main archive for data, generally called "Master File", which is accessed directly following the initial reset procedure, and it also emulates specific data archives, more generally called "files", for management of the data that may be traced to the individual devices interfaced. All the various data archives or files may be accessed, after they have been selected, without any protection.

The data structure and organization, which is also called "File System", as provided for by the ISO 7816 interface belong to the known art, and will not be described in detail. It is stressed only that each device interfaced by the smart card 10 corresponds to a specific file structure, also called "Directory File" (DF), in turn containing elementary data files, or simply "Elementary Files" (EF).

In short, in this stage the system ascertains presence of the multifunctional smart card 10, effects recognition of it, and defines an organizational structure for managing the data that may be traced to the devices interfaced by the multifunctional smart card 10.

### Reading of a magnetic card

In this case, the user slides or inserts the magnetic card 22 along the reader 21, so that the data stored on the magnetic stripe 25 are read and sent to the ISO 7816 interface that the multifunctional smart card 10 is provided with, where they will be managed according to the organizational criteria defined by the interface.

In particular, management of the magnetic card 22 is associated with a DF which has four EF, called respectively SW, TRK1, TRK2 e TRK3, of which the file SW is used for checking that the magnetic card has been read, and read correctly, whereas the other three files TRK1, TRK2 and TRK3 each contain the data that have been read from a respective track trk-1, trk-2, and trk-3 on the magnetic card 22.

For a fuller picture, some indications and the relative data structures of these four files, SW, TRK1, TRK2, and TRK3, are given below, using the terminology normally employed and certainly known to those acquainted with the sector art.

File Sw : this is a binary file of 4 bytes located directly under DF, and can be accessed both in read and write mode, to perform a reset of status of the Flags. Its internal data structure is as follows:

| byte 0 | byte 1 | byte 2 | byte 3 |
|---|---|---|---|
| Status of last read | trk - 1 present flag | trk - 2 present flag | trk - 3 present flag |
| '0'= tracks missing | '0'= track missing | '0'= track missing | '0'= track missing |
| '1'= at least one track present | '1'= track present | '1'= track present | '1'= track present |

File TRK1 : this is a binary file of 81 bytes located directly below DF, access is read-only, and it contains information regarding track 1. Its internal data structure is as follows:

| Correct read flag - track | len data trk | Data of track - 1 - |
|---|---|---|
| '0'=track not read correctly | 0...79 | % .......... ?Irc |
| '1'= track valid | | |

File TRK2 : this is a binary file of 42 bytes located directly below the DF, it contains information regarding track 2, and access is read-only. Its internal data structure is as follows:

| Correct read flag - track | len data trk | Data of track- 2 - |
|---|---|---|
| '0'=track not read correctly | 00... 40 | ; .......... ?Irc |
| '1'= track valid | | |

File TRK3 : this is a binary file of 109 bytes located directly below DF, it contains information concerning track trk-3, access is read-only, and it has the following internal data structure:

| Correct read flag - track | len data trk | Data of track - 3 - |
|---|---|---|
| '0'=track not read correctly | 00...107 | ; .......... ?lrc |
| '1'= track valid | | |

At this point, after the data have been read from the magnetic card 22 and placed in the DF, the system effects and completes those operations, particularly of enabling, associated with the magnetic card used.

### Management of an external device

In this case, a generic external device, such as a printer, is connected via an RS232 serial line to the port 28, so that the DF corresponding to this external device is selected.

The DF structure includes four EF, called respectively CONF, STATUS, DATAIN and DATAOUT, which may be accessed without any protection after they have been selected, while communication with the external device connected is managed by way of the commands envisaged by the ISO standard for data management.

In particular, as is known, the file CONF defines the desired configuration of the communication line, the file STATUS corresponds to the instantaneous status of the communication line, the file DATAIN contains the data sent to the external device, and the file DATAOUT contains the data received by the external device.

A description of the internal structure of these files will not be furnished, as it is widely known.

To further clarify the features of the multifunctional smart card 10 and of the system it is used in, an account will be given of an operating example of the invention in which the multifunctional smart card 10 permits to use an ordinary magnetic card to effect a payment on a banking terminal, of the type known as Cash Dispenser for example, suitable for accepting only microprocessor-controlled smart cards.

To begin with the multifunctional smart card 10 is inserted in the corresponding smart card reader incorporated in the banking terminal, so that the system that the banking terminal is a part of, having recognized presence of the smart card 10, produces an appropriate message on a display unit adjacent to the reader inviting the user to use his magnetic card and, more particularly, to insert it in the slot 23 of the corresponding reading device 21 provided in the multifunctional smart card 10.

After the magnetic card has been inserted in the reading device 21, the system asks the user to key in on the keyboard of the banking terminal his secret personal code, called the PIN, and afterwards, following recognition by the system of the PIN entered, to key in on the keyboard the amount of the figure to be paid or generally the digit relative to the transaction that the user wants to carry out.

At this point, and in any case only after the user has keyed in his PIN, the system reads and acquires through the smart card reader the data stored on the magnetic card, and in particular on a given track of the relative magnetic stripe, and processes the data read so as to update the file corresponding to the track read.

The system continues to assist and guide the user in the various stages of the transaction through a series of messages that appear on the display unit until the end of the transaction, which is generally announced by a closing message such as "Transaction completed".

Similarly the multifunctional smart card 10 may allow a payment to be made using a magnetic credit card on a terminal associated with a point of sale and adapted for receiving only smart cards.

In this case, operation is similar to that of the example with the banking terminal, except that it is not necessary for the user to type in his PIN but only the amount of the figure that he has to pay.

The examples of operation described above demonstrate that the multifunctional smart card 10 advantageously allows possessors of magnetic cards to work on reading equipment adapted only for accepting and reading microprocessor-based smart cards. Therefore the multifunctional smart card 10 represents a useful and convenient device or adapter for adapting ordinary magnetic cards for use on reading equipment suitable for receiving and reading only with microprocessor-controlled smart cards.

More particularly, the operator of equipment of this type could equip himself with a model of a multifunctional smart card 10 to be used as an adapter whenever a customer comes who does not have a smart card but has instead only a magnetic card.

Changes may be made to the dimensions, shapes, components, circuit elements, connections and contacts, as also to the details of the circuitry and method of construction illustrated and to the mode of operation, without departing from the scope of the invention.

## Claims

1. Multifunctional smart card (10) having a mechanical, electrical and logical interface (11, 12, 13, 51) equivalent to an ordinary microprocessor-based smart card for coupling and exchanging data with corresponding external reading equipment (15), **characterized in** that it comprises an internal reader (21) of magnetic cards (22), said interface (13) being connected to said internal reader (21) for receiving and managing in relation to said external reading equipment (15) the data read from said magnetic cards (22).

2. Multifunctional smart card (10) according to claim 1, **characterized in** that said interface (11, 12, 13, 51) is produced in accordance with the ISO 7816 standard.

3. Smart card according to one of the previous claims, **characterized in** that said internal reader (21) is connected directly to a microprocessor (13) of said interface.

4. Multifunctional smart card (10) according to any of the previous claims, wherein said multifunctional smart card has a laminar support (11) having a first portion of dimensions in accordance with said interface so as to be mechanically compatible with said external reading equipment (15), **characterized in** that said internal reader (21) of magnetic cards is mounted on a second portion of said support distinct from said first portion, has a structure protruding from said support (11), and is provided with a slot (23) suitable for receiving said magnetic cards (22).

5. Multifunctional smart card (10) having a mechanical, electrical and logical interface (11, 12, 13) equivalent to an ordinary microprocessor-based smart card for coupling and exchanging data with corresponding external reading equipment (15) **characterized in** that it comprises connecting means (28) for the connection and transmission of data between said multifunctional smart card (10) and a generic external device, said interface (13) being connected to said connecting means (28) for managing in relation to said external reading equipment (15) the data transmitted between said multifunctional smart card (10) and said generic external device.

6. Multifunctional smart card (10) according to claim 5, **characterized in** that said connecting means (28) comprise an RS 232 type serial port.

7. Multifunctional smart card with microprocessor in combination with external reading equipment (15), wherein said multifunctional smart card has a laminar support (11) and a physical, electrical and logical interface (11, 12, 12a, 13) for coupling and exchanging data with said external reading equipment (15), **characterized in** that said multifunctional smart card (10) incorporates a reading device (21) of magnetic cards (22) connected to said interface (13), wherein said support has a first portion bearing a contact area (12, 12a) of said interface and a second portion, distinct from said first portion, on which said reading device (21) is mounted, and wherein, when said first portion is inserted in said external reading equipment (15) for electrically connecting said multifunctional smart card (10) to said external reading equipment through said contact area, said second portion protrudes with said reading device (21) from said external reading equipment (15), so that a user can access said magnetic card reading device (21) in order to insert therein a magnetic card.

8. Adapting device (10) or adapter for adapting a magnetic card (22) for use on external reading equipment (11) suitable for accepting and reading only microprocessor-based smart cards, **characterized in that** said adapting device consists of a smart card (10) of the microprocessor type comprising a support (11), a mechanical, electrical and logical interface (11, 12, 13) for allowing the coupling and the exchange of data between said smart card (10) and said external reading equipment (15), and an internal reader (21) of magnetic cards mounted on said support (11) and connected to said interface (13), so that the data read from said magnetic card (22) by means of said internal reader (21) are processed and managed in relation to said external reading equipment (15) through said interface (12, 12a, 13).

9. Adapting device (10) according to claim 8, **characterized in that** it further comprises connecting means (28) for the connection and transmission of data between said adapting device (10) and a generic external device, such as for instance a printer, wherein said connecting means (28) are connected, like said magnetic card reading device (21), to said interface (13).

10. System comprising:
external equipment (15) for the reading of microprocessor-based smart cards,
a multifunctional smart card (10) with microprocessor, and
interfacing means (11, 12, 12a, 13) for allowing the mechanical, electrical and logical coupling, for the purpose of transmitting data, between said multifunctional smart card (10) and said external equipment (15),
wherein said multifunctional smart card incorporates a magnetic card reading device (22) connected to said interface (13), and
wherein, when said multifunctional smart card is coupled with said external equipment (15), said system manages, according to said interface, the data that are transmitted through said multifunctional smart card (10) to said external equipment (15),
so that, when a magnetic card (22) is made cooperate with said reading device (21), the data read from said magnetic card are managed in relation to said external equipment (15), organized and processed in accordance with said interface.

11. System according to claim 8, **characterized in that** said multifunctional smart card further incorporates connecting means (28) for connecting and exchanging data between said multifunctional smart card (10) and a generic external device, said connecting means (28) being connected, similarly to said magnetic card reading device, with said interface (13), so that the data exchanged with said generic external device are organized and processed in accordance with said interface.

12. Multifunctional smart card (10) comprising first mechanical, electrical and logical interfacing means (11, 12, 13) typical of a normal microprocessor-based smart card for allowing cooperation, the purpose of which is to transmit data, between said multifunctional smart card (10) and corresponding external reading equipment (15), **characterized in** that it further comprises second interfacing means (21, 28), associated with said first interfacing means (12, 13), for allowing cooperation, the purpose of which is to transmit data, between said multifunctional smart card (10) and a magnetic card (22) and/or between said multifunctional smart card (10) and a generic external device, so that the data read from said magnetic card (22) and/or exchanged with said external device are managed in relation to said external reading equipment (10) through said first (12, 13) and said second (21, 28) interfacing means.

13. Multifunctional smart card (10) according to claim 12, **characterized in** that said first interfacing means (11, 12, 13) and said second interfacing means (21, 28) are made in accordance with the ISO 7816 standard.

14. Method for working with a magnetic type card (22) on a terminal (15) suitable for receiving only smart type cards, characterized by the following steps:
providing a multifunctional smart card (10) in accordance with claim 1;
inserting said multifunctional smart card (10) in said terminal (15);
arranging for said multifunctional smart card to organize, in accordance with the interface provided in said multifunctional smart card, the data that will be received from the devices interfaced by said multifunctional smart card;
inserting said magnetic card in the relative reader provided in said multifunctional smart card for reading the data and information stored in said magnetic card; and
organizing and processing the data and information read on said magnetic card in accordance with the interface of said multifunctional smart card.
